(19) Europäisches Patentamt
European Patent Office
Office européen des brevets

(11) **EP 1 947 354 A1**

(12) **EUROPEAN PATENT APPLICATION**
published in accordance with Art. 158(3) EPC

(43) Date of publication:
**23.07.2008 Bulletin 2008/30**

(21) Application number: **06768244.3**

(22) Date of filing: **14.07.2006**

(51) Int Cl.:
*F16C 19/46* (2006.01)    *F16C 33/34* (2006.01)
*F16C 33/60* (2006.01)

(86) International application number:
**PCT/JP2006/314084**

(87) International publication number:
**WO 2007/013317 (01.02.2007 Gazette 2007/05)**

(84) Designated Contracting States:
**DE FR**

(30) Priority: **29.07.2005 JP 2005219995**

(71) Applicants:
• **NTN Corporation**
**Osaka-shi, Osaka 550-0003 (JP)**
• **HONDA MOTOR CO., LTD.**
**Tokyo 107-8556 (JP)**

(72) Inventors:
• **ABE, Katsufumi,**
**c/o NTN CORPORATION**
**Iwata-shi,**
**Shizuoka 438-8510 (JP)**
• **OISHI, Shinji,**
**c/o NTN CORPORATION**
**Iwata-shi,**
**Shizuoka 438-8510 (JP)**

• **YOSHIMURA, Yugo,**
**c/o NTN CORPORATION**
**Iwata-shi,**
**Shizuoka 438-8510 (JP)**
• **FUJII, Noriaki,**
**c/o HONDA R & D CO., LTD.**
**Wako-shi,**
**Saitama 351-0193 (JP)**
• **FUJIMOTO, Tomoya,**
**c/o HONDA R & D CO., LTD.**
**Wako-shi,**
**Saitama 351-0193 (JP)**

(74) Representative: **Grosse, Wolfgang**
**Grosse - Schumacher - Knauer - von**
**Hirschhausen**
**Patent- und Rechtsanwälte**
**Nymphenburger Strasse 14**
**80335 München (DE)**

(54) **NEEDLE ROLLER BEARING**

(57) A needle roller bearing comprises an outer ring having a plurality of outer ring members split by a parting line extending in the axial direction of the bearing, and a plurality of needle rollers rotatably arranged on the raceway surface of the outer ring. Thus, a non-contact length "L" between the outer ring members and the needle roller at an abutment part of the adjacent outer ring members, and an effective length "w" of the needle roller has a relation such that L / w < 0.5.

FIG. 1

**Description**

BACKGROUND OF THE INVENTION

1. Field of the Invention

The present invention relates to a needle roller bearing that supports a crankshaft, a camshaft, a balance shaft, and a rocker shaft of a car and the like.

2. Description of the Background Art

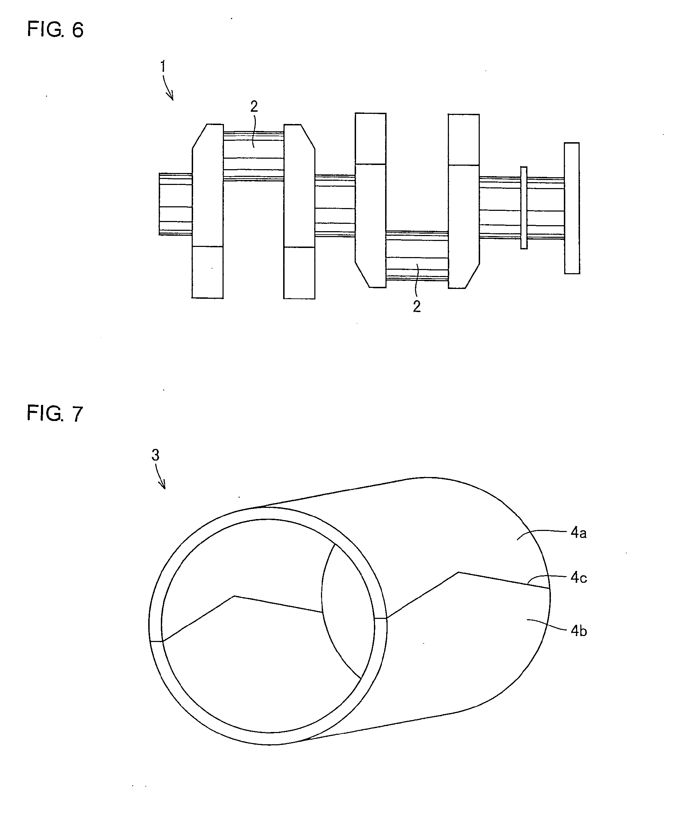

Conventionally, as a bearing that supports a crankshaft 1 of a car and the like as shown in Fig. 6, a split type of sliding bearing has been used in general. Since the sliding bearing has high load capacity, it is suitable for being used in a high load environment.

However, as a fuel-efficient car is demanded in view of an environment recently, a needle roller bearing is used instead of the sliding bearing in some cases. Although the needle roller bearing has low load capacity as compared with the sliding bearing, since its friction resistance during rotation is small, an oil amount at a supporting part can be reduced.

However, a needle roller bearing to support a crank pin 2 of the crankshaft 1 cannot be press fitted in the axial direction. Thus, a needle roller bearing that can be used in this place is disclosed in U.S. Patent No. 1921488, for example. Since the needle roller bearing disclosed in U.S. Patent No. 1921488 comprises outer ring members 4a and 4b split by a parting line extending in the axial direction of the bearing as shown in Fig. 7, it can be incorporated in the crank pin 2.

A gap is provided in the circumferential direction to some extent at an abutment part of the outer ring members 4a and 4b shown in Fig. 7. A certain amount of this gap is necessary in view of not only an error generated at the time of manufacturing, but also engagement, a temperature expansion and the like.

However, when the needle roller passes through the abutment part, since a contact length between the needle roller and the outer ring member becomes short, if the gap is large unnecessarily, a load concentrates on a part of the rolling surface of the needle roller, which could cause a trouble such as biased wear and the like.

SUMMARY OF THE INVENTION

It is an object of the present invention to provide a needle roller bearing in which a gap at an abutment part of a plurality of outer ring members in the circumferential direction is optimized.

A needle roller bearing according to the present invention comprises an outer ring having a plurality of outer ring members split by a parting line extending in the axial direction of the bearing and a plurality of needle rollers rotatably arranged on the raceway surface of the outer ring. A non-contact length "L" between the outer ring members and the needle roller at an abutment part of the adjacent outer ring members, and an effective length "w" of the needle roller has a relation such that L / w < 0.5.

According to the above constitution, when 50% or more of the effective length of the needle roller is in contact with the outer ring member at the abutment part, a trouble such as biased wear caused when a load concentrates on one part of a rolling surface can be prevented. In addition, the term "the effective length of the needle roller" in this specification designates a length of a part in which chamfer parts at both ends are removed from a roller length.

Preferably, the outer ring member comprises a V-shaped projected part whose tip is a circular arc, at its one end and a V-shaped recessed part corresponding to the V-shaped projected part, at the other end thereof. When it is assumed that a central angle of the V-shaped projected part is " θ ", a curvature radius of the circular arc of the tip of the V-shaped projected part is "R", and a gap of the abutment part in the circumferential direction is "a", an effective length "w" of the needle roller satisfies the following expression.

$$[\text{Expression 1}]$$

$$w > 4\left\{ R\left( \frac{1}{\sin\frac{\theta}{2}} - 1 \right) + a \right\} \tan\frac{\theta}{2}$$

In the case of the needle roller bearing in which the outer ring is formed by joining the V-shaped projected part and the V-shaped recessed part provided at ends of the outer ring member, the effective length "w" of the needle roller can be calculated using the above expression. Thus, when the effective length "w" of the needle roller satisfies the above expression, the trouble such as biased wear of the rolling surface of the needle roller can be prevented.

By optimizing the gap in the circumferential direction at the abutment part of the outer ring members, the needle roller bearing can be superior in durability and maintain the smooth rotation of the needle roller bearing.

BRIEF DESCRIPTION OF THE DRAWINGS

Fig. 1 is a view showing an abutment part of outer ring members of a needle roller bearing according to one embodiment of the present invention;

Fig. 2A is a detailed view showing the abutment part of the outer ring member shown in Fig. 1;

Fig. 2B is a partially enlarged view showing the outer ring member shown in Fig. 2A;

Fig. 3A is a front view showing the needle roller bearing according to one embodiment of the present invention;

Fig. 3B is a sectional view taken along line A-A' in Fig. 3A;

Fig. 4A is a longitudinal sectional view showing the outer ring member of the needle roller bearing according to one embodiment of the present invention;

Fig. 4B is a view showing the outer ring member taken from the direction of an arrow B in Fig. 4A;

Fig. 4C is a view showing the outer ring member taken from the direction of an arrow C in Fig. 4A;

Fig. 5A is a front view showing a retainer of the needle roller bearing according to one embodiment of the present invention;

Fig. 5B is a sectional view taken along line D-D' in Fig. 5A;

Fig. 6 is a view showing a crankshaft of a car; and

Fig. 7 is a schematic view showing an outer ring that is used in a conventional needle roller bearing and can be split in the diameter direction.

DESCRIPTION OF THE PREFERRED EMBODIMENTS

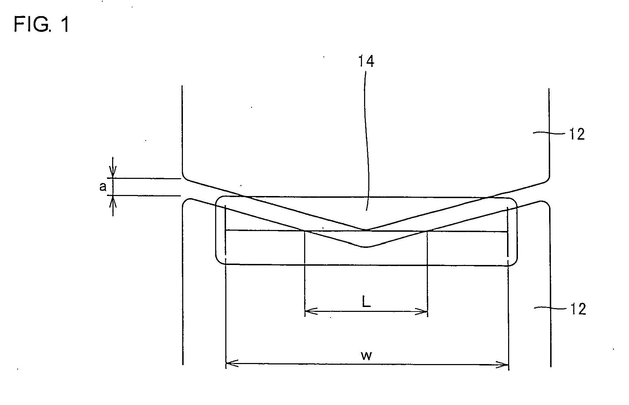

A needle roller bearing 11 according to one embodiment of the present invention will be described with reference to Figs. 1 to 5B hereinafter.

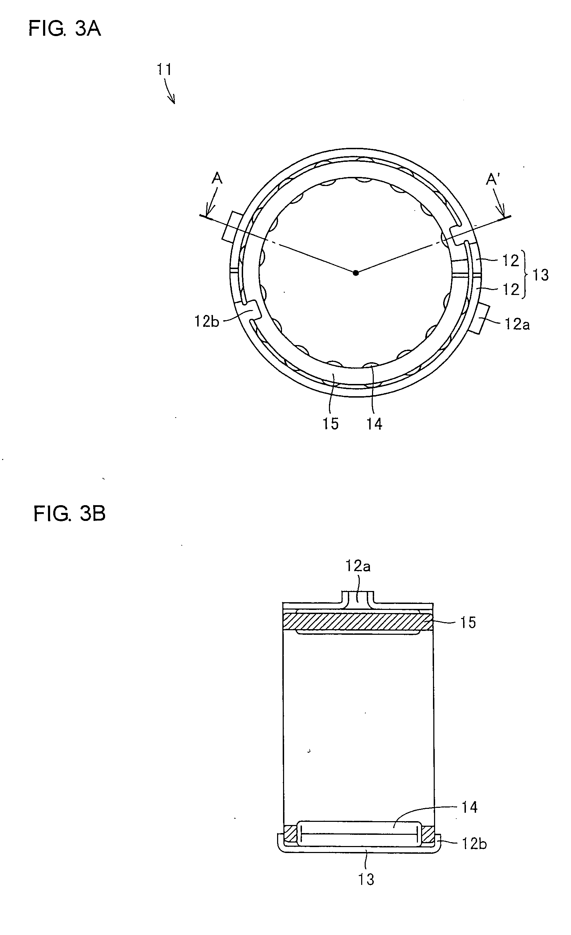

As shown in Figs. 3A and 3B, the needle roller bearing 11 comprises an outer ring 13 having two outer ring members 12 split by a parting line extending in the axial direction of the bearing, a plurality of needle rollers 14 rotatably arranged on the raceway surface of the outer ring 13, and a retainer 15 retaining the needle rollers 14.

As shown in 4A, the outer ring member 12 comprises a projection 12a at a position shifted from the center in the circumferential direction thereof as an engagement part with the housing to be positioned, and an engagement click 12b projecting from an end of the outer ring member 12 in the width direction toward inner side in the diameter direction, to prevent the retainer 15 from moving in the axial direction.

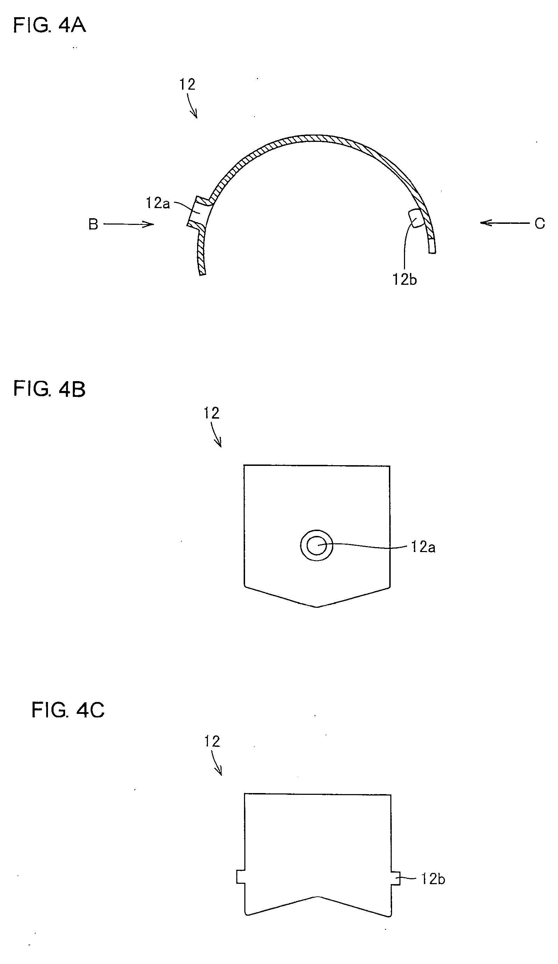

In addition, as shown in Figs. 4B and 4C, one end of the outer ring member 12 in the circumferential direction is a V-shaped projected part and the other end thereof is a V-shaped recessed part, and the cylindrical outer ring 13 is formed by coupling the projected part and the recessed part of the outer ring member. Here, it is to be noted that the parting line of the outer ring 13 may only have to split the outer ring 13 in the diameter direction and it does not always coincide with the axial direction strictly.

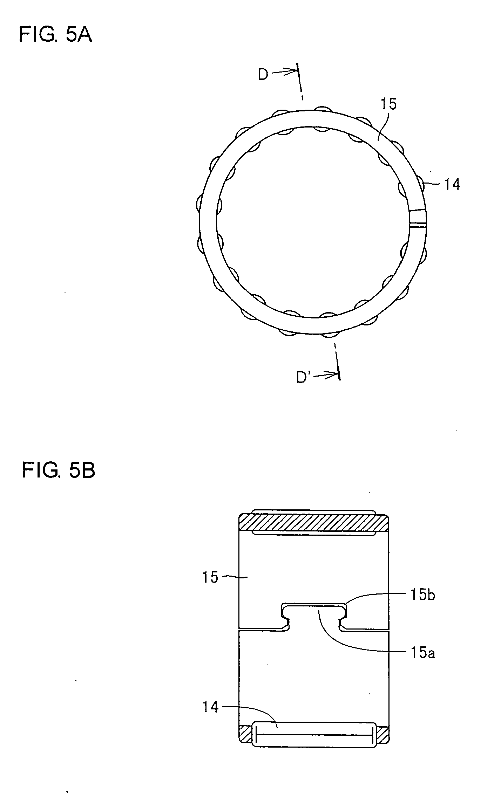

The retainer 15 is formed of a resin material and has pockets to hold the needle rollers 14 in the circumferential direction as shown in Fig. 5A. In addition, as shown in Fig. 5B, the retainer 15 is split at a part on the circumference in the axial direction. Thus, the retainer 15 is elastically deformed to be incorporated in a shaft and then a projected part 15a and a recessed part 15b at the ends are engaged.

According to the needle roller bearing 11 having the above constitution, since a part of the outer ring 13 and a part of the retainer 15 are partially split, it can be used as a bearing that supports a component such as a crankshaft, a camshaft, a balance shaft, a rocker shaft of a car and that like in which a bearing cannot be press fitted in the axial direction.

Thus, the projection 12a is provided in the outer ring member 12 to prevent the outer ring 13 from rotating in the circumferential direction, and the engagement click 12b is provided to prevent the retainer 15 from moving in the axial direction.

According to the needle roller bearing 11 having the above constitution, a gap is provided at the abutment part of the two outer ring members 12 in the circumferential direction as shown in Fig. 1. At this time, a non-contact length "L" between the needle roller passing through the abutment part and the outer ring members 12, and an effective length "w" of the needle roller 14 has a relation such that L / w < 0.5. Thus, since a load is prevented from concentrating on one part of the rolling surface of the needle roller 14, a trouble such as biased wear on the rolling surface can be prevented.

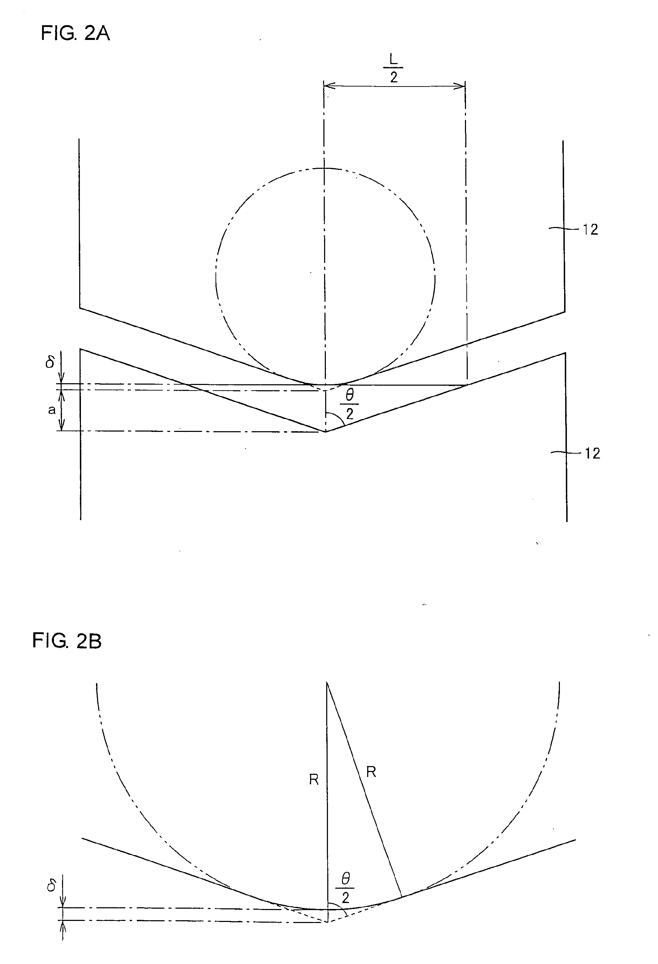

A description will be made of a method of calculating a minimum effective length of the needle roller to be required with reference to Figs. 2A and 2B hereinafter.

According to the outer ring member 12 of the needle roller bearing 11 shown in Figs. 2A and 2B, the V-shaped projected part having a circular tip is provided at one end and the V-shaped recessed part corresponding to the V-shaped projected part is provided at the other end. Thus, the outer ring 13 is formed by coupling the V-shaped projected and recessed parts.

Here, when it is assumed that a gap between the outer ring members 12 in the circumferential direction is "a", and a central angle of the V-shaped part is " θ", the non-contact length "L" between the outer ring members 12 and the needle roller 14 is calculated using the following expression.

[Expression 2]

$$L = 2(a + \delta)\tan\frac{\theta}{2}$$

In addition, " δ" is a gap in the circumferential direction generated because the tip of the V-shaped projected part is made circular. When it is assumed that a curvature radius of the arc of the tip of the V-shaped projected part is "R", the " δ " is calculated using the following expression.

[Expression 3]

$$\delta = R\left(\frac{1}{\sin\frac{\theta}{2}} - 1\right)$$

Here, as described above, in order to prevent the trouble such as biased wear and the like, since it is necessary to satisfy that L / w < 0.5, the effective length "w" of the needle roller 14 is calculated by substituting the expressions 2 and 3.

[Expression 4]

$$w > 4\left\{R\left(\frac{1}{\sin\frac{\theta}{2}} - 1\right) + a\right\}\tan\frac{\theta}{2}$$

Therefore, when the needle roller 14 having the effective length "w" that satisfies the expression 4 is used, the needle roller bearing 11 can be superior in durability and maintain the smooth rotation of the needle roller 14.

In addition, in order to reduce the non-contact length "L" between the outer ring members 12 and the needle roller 14, it is considered that the gap "a" between the outer ring members 12 in the circumferential direction is to be reduced, the central angle " θ " of the V-shaped projected part is to be reduced, and the curvature radius "R" of the arc at the tip of the V-shaped projected part is to be reduced.

Then, in order to confirm the effect of the present invention, a test was performed in such a manner that the non-contact length "L" between the outer ring members and the needle roller is changed and a bearing life was measured when a radial load is applied during rotation. The test condition is as follows. In addition, the test result is as shown in Table 1.

Non-contact length L : 3mm, 5mm, 6mm

Radial load : 5000(N)

Rotation speed : 3000 (rpm)

[Table 1]

| Relation between non-contact length L and bearing life | | |
|---|---|---|
| Non-contact length | Ratio L/W (L:non-contact length / W:effective length of roller) | Life ratio in test result (L50) |
| 3mm | 0.31 | 1 |
| 5mm | 0.51 | 1 |
| 6mm | 0.61 | 0.3 |

Table 1 shows a life ratio ($L_{50}$) in the test result based on a bearing having a non-contact length of 0mm. Referring to Table 1, when the non-contact length "L" is not more than 50% of the effective length "w" of the needle roller, the bearing life is not shortened. Thus, the effect of the present invention has been confirmed.

Although the outer ring 13 comprises the two outer ring members 12 split in the diameter direction in the above embodiment, the present invention is not limited to this. For example, an outer ring may be split into any number.

Although one V-shaped projected part and one V-shaped recessed part are coupled at the abutment part of the outer ring member 12 in the above embodiment, a plurality of projected parts and a plurality of recessed parts may be coupled.

Although the one projection 12a is provided in each outer ring member 12 in the above embodiment, the present invention is not limited to this. It may be provided over the entire circumference of the outer ring 13 or a plurality of projections may be provided in each outer ring member 12.

Still furthermore, the retainer 15 may be formed of a metal material using a pressing process instead of a resin, or the present invention may be applied to a full-type roller bearing without comprising the retainer 15.

Although the embodiments of the present invention have been described with reference to the drawings in the above, the present invention is not limited to the above-illustrated embodiments. Various kinds of modifications and variations may be added to the illustrated embodiments within the same or equal scope of the present invention.

The present invention can be advantageously applied to a needle roller bearing that supports a crankshaft, a camshaft, a balance shaft, and a rocker shaft of a car, and the like.

**Claims**

1. A needle roller bearing comprising
an outer ring having a plurality of outer ring members split by a parting line extending in the axial direction of the bearing, and
a plurality of needle rollers rotatably arranged on the raceway surface of said outer ring, wherein
a non-contact length "L" between said outer ring members and said needle roller at an abutment part of said adjacent outer ring members, and an effective length "w" of said needle roller has a relation such that
L/w<0.5

2. The needle roller bearing according to claim 1, wherein
said outer ring member comprises a V-shaped projected part having a circular arc tip, at its one end and a V-shaped recessed part corresponding to said V-shaped projected part, at the other end thereof, and
when it is assumed that a central angle of said V-shaped projected part is "$\theta$", a curvature radius of the circular arc of the tip of said V-shaped projected part is "R", and a gap at said abutment part in the circumferential direction is "a", the effective length "w" of said needle roller satisfies the following expression.

[Expression 1]

$$w > 4\left\{ R\left( \frac{1}{\sin\frac{\theta}{2}} - 1 \right) + a \right\} \tan\frac{\theta}{2}$$

FIG. 1

## FIG. 2A

## FIG. 2B

FIG. 3A

FIG. 3B

FIG. 4A

FIG. 4B

FIG. 4C

FIG. 5A

FIG. 5B

FIG. 6

FIG. 7

**INTERNATIONAL SEARCH REPORT**

| International application No. |
| --- |
| PCT/JP2006/314084 |

A.  CLASSIFICATION OF SUBJECT MATTER
*F16C19/46(2006.01)i, F16C33/34(2006.01)i, F16C33/60(2006.01)i*

According to International Patent Classification (IPC) or to both national classification and IPC

B.  FIELDS SEARCHED

Minimum documentation searched (classification system followed by classification symbols)
F16C19/46, F16C33/34, F16C33/60

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2005-180459 A  (NSK Ltd.), 07 July, 2005 (07.07.05), Figs. 2, 4 & US 2005/0084192 A1 Figs. 5, 7 | 1,2 |
| Y | JP 55-107118 A  (Donarudo E. Ruisu), 16 August, 1980 (16.08.80), Page 2, lower left column, line 18 to lower right column, line 19 & EP 13628 A1 Page 3, line 21 to page 4, line 6 | 1,2 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 September, 2006 (20.09.06) | 26 September, 2006 (26.09.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/314084 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | CD-ROM of the specification and drawings annexed to the request of Japanese Utility Model Application No. 12665/1993(Laid-open No. 65622/1994) (Nippon Thompson Co., Ltd.), 16 September, 1994 (16.09.94), Par. Nos. [0007], [0022] & US 5423615 A Column 1, lines 51 to 57; column 6, lines 5 to 11 | 1,2 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1921488 A